# EUROPÄISCHE PATENTSCHRIFT

(11) **EP 2 154 041 B1**
(45) Veröffentlichungstag und Bekanntmachung des Hinweises auf die Patenterteilung: **09.11.2016**
(21) Anmeldenummer: 09007055.8
(22) Anmeldetag: 27.05.2009
(51) Int. Cl.: B60T 17/22, B60T 13/26, B60T 15/24, B60T 8/34

(54) **Druckmittelbetätigte Bremsvorrichtung für Kraftfahrzeuge**
Braking device for a motor vehicle activated by compressing a medium
Dispositif de freinage actionné par un moyen de pression pour véhicules automobiles

(30) Priorität: 29.07.2008 DE 102008035335
(43) Veröffentlichungstag der Anmeldung: 17.02.2010
(73) Patentinhaber: MAN Truck & Bus AG, 80995 München (DE)
(72) Erfinder: Kirchmeier, Klaus, 85737 Ismaning (DE); Hofstetter, Thomas, 84048 Mainburg (DE)
(74) Vertreter: v. Bezold & Partner Patentanwälte - PartG mbB

(56) Entgegenhaltungen:
- EP-A1- 0 481 227
- EP-A2- 1 069 017
- WO-A1-01/08953
- DE-A1- 10 036 287
- DE-B3-102005 062 907
- DE-C1- 19 933 483

## Beschreibung

Die vorliegende Erfindung bezieht sich auf eine druckmittelbetätigte Bremsvorrichtung für Kraftfahrzeuge und insbesondere Strassenkraftfahrzeuge. Derartige druckmittelbetätigte Bremsvorrichtungen sind aus dem Stand der Technik seit langem bekannt. Diese Bremsvorrichtungen weisen üblicherweise druckmittelbetätigte Bremszylinder auf, welche die Bremswirkung herbeiführen. Dabei sind weiterhin entsprechende Bremskreise, wie bspw. Vorderachsbremskreise vorgesehen, welche das Druckmittel unter dem nötigen Druck zur Verfügung stellen. Falls derartige Bremskreise ausfallen, stehen zwar teilweise noch weitere Bremskreise wie Hinterachsbremskreise zur Verfügung, welche jedoch für sich genommen die erforderliche Bremskraft nicht erreichen können, insbesondere dann nicht, wenn die Hinterachslast zu gering ist. Dies kann beispielsweise der Fall sein, wenn eine Zugmaschine ohne Gespann fährt.

Aus der EP 0 726 190 B1 ist eine druckmittelbetätigte Fahrzeugbremsanlage bekannt. Diesem Patent liegt ebenfalls das Problem zugrunde, dass, wenn an den Rädern der Vorderachse des Fahrzeugs der zugeordnete Bremskreis ausfällt, das Erreichen der vom Gesetzgeber vorgeschriebenen aufzubringenden Bremskraft problematisch sein kann. Als Lösung wird vorgeschlagen, als Bremsdruck für einen Bremszylinder des defekten Bremskreises den Druck eines weiteren intakten Bremskreises oder auch den Druck einer von den beiden Bremskreisen des Fahrzeugs unabhängigen Druckmittelquelle zu verwenden. Dabei wird ein Bremszylinder beschrieben, der entweder aus einem Hauptbremskreis oder einem Redundanzbremskreis betreibbar ist. Zu diesem Zweck ist eine Steuerventileinrichtung vorgesehen, über die ein erster und zweiter Bremszylinder aus der Druckmittelquelle des zweiten Bremskreises mit einem Druckmittel versorgbar ist.

Durch diese Vorgehensweise wird eine Druckaufrechterhaltung auch bei Ausfall eines Bremskreises erreicht. In der Praxis kann es jedoch vorkommen, dass sich der Ausfall eines bestimmten Bremskreises unterschiedlich auf mehrere Bremszylinder, wie die Bremszylinder an der Vorderachse des Fahrzeugs, auswirkt. Im Falle der oben genannten EP 0 726 190 B1 kann jedoch auf derartige Situationen nicht reagiert werden.

Die DE 100 36 287 A1 offenbart ein Verfahren und eine Vorrichtung zur Steuerung von Radbremsen. Zur Verbesserung der Verfügbarkeit und zur Erfüllung gesetzlicher Anforderungen an ein elektrisches Bremssystem wird im Fehlerfall eine aus einem zweiten, vom ersten unabhängigen Energiekreis abgeleitete Ansteuerung der Ventile bereitgestellt, durch die der Bremsdruck in der wenigstens einen Radbremse auch im Fehlerfall eingestellt werden kann.

Die WO 01/08953 A1 offenbart eine druckmittelbetätigte Fahrzeugbremsanlage, wobei einem ersten Bremskreis wenigstens ein Bremszylinder zugeordnet ist, der über eine erste Steuerventileinrichtung in Abhängigkeit von einem dem ersten Bremskreis zugeordneten Steuersignal eines Bremswertgebers mit einer Druckmittelquelle für den ersten Bremskreis verbindbar ist, einem zweiten Bremskreis ein erster Bremszylinder und ein zweiter Bremszylinder zugeordnet sind, die über eine zweite Steuerventileinrichtung in Abhängigkeit von einem dem zweiten Bremskreis zugeordneten Steuersignal des Bremswertgebers mit einer zweiten Druckmittelquelle für den zweiten Bremskreis verbindbar sind, eine dritte Steuerventileinrichtung einem weiteren Bremskreis zugeordnet ist, und eine Umschaltventileinrichtung vorgesehen ist, die derart steuerbar ist, dass eine von der Druckmittelquelle des zweiten Bremskreises unabhängige Druckmittelquelle mit wenigstens einem Bremszylinder des zweiten Bremskreises verbindbar ist.

Der vorliegenden Erfindung liegt daher die Aufgabe zugrunde, eine druckmittelbetätigte Bremsvorrichtung zur Verfügung zu stellen, welche Reaktionsmöglichkeiten auf unterschiedliche Betriebssituationen und insbesondere Ausfallsituationen erlaubt. Daneben soll eine betriebssichere Bremsvorrichtung geschaffen werden.

Dies wird erfindungsgemäß durch eine Bremsvorrichtung nach Anspruch 1 und Anspruch 11 erreicht. Vorteilhafte Ausführungsformen und Weiterbildungen sind Gegenstand der Unter-ansprüche.

Eine erfindungsgemäße druckmittelbetätigte Bremsvorrichtung für Straßenfahrzeuge weist ein erstes von dem Druckmittel betätigbares Bremselement auf sowie ein zweites von dem Druckmittel betätigbares Bremselement und einen ersten Bremskreis mit einem ersten Druckmittelreservoir, welcher Bremskreis über wenigstens eine Verbindungsleitung mit dem ersten Bremselement und mit dem zweiten Bremselement verbindbar ist um über diese Verbindungsleitung das Bremselement mit dem Druckmittel zu betätigen. Weiterhin ist ein zweiter Bremskreis (ggfs auch mit einem weiteren Druckmittelreservoir) vorgesehen, welcher Bremskreis über eine Verbindungsleitung mit dem zweiten Bremselement verbindbar ist, um über diese Verbindungsleitung das Bremselement mit dem Druckmittel zu betätigen.

Erfindungsgemäß weist die Bremsvorrichtung eine erste Steuerventileinrichtung auf, über welche das erste Bremselement sowohl mit dem ersten Bremskreis als auch mit dem zweiten Bremskreis (hydraulisch und/oder pneumatisch) verbindbar ist und eine zweite Steuerventileinrichtung, über welche das zweite Bremselement sowohl mit dem ersten Bremskreis als auch mit dem zweiten Bremskreis (hydraulisch und/oder pneumatisch) verbindbar ist.

Damit wird erfindungsgemäß vorgeschlagen, dass die beiden Bremselemente jeweils durch diesen zugeordnete Steuerventileinrichtungen bspw. in der Art eines Wechselventils, an die Bremskreise anbindbar sind. Auf diese Weise ist es möglich, dass das erste Bremselement und das zweite Bremselement auch über unterschiedliche Bremskreise bzw. deren Druckmittelreservoirs betätigbar sind. Vorzugsweise sind das erste Bremselement und das zweite Bremselement unabhängig voneinander betätigbar. Unter einem Druckmittel wird insbesondere auch ein gasförmiges Druckmittel und insbesondere Luft verstanden. Es wäre jedoch auch möglich, ein flüssiges Druckmittel zu verwenden.

Damit ist weder die erste Steuerventileinrichtung noch die zweite Steuerventileinrichtung mit beiden Bremselementen, wie bspw. Bremszylindern verbunden, sondern jeweils nur mit einem. Die erfindungsgemäße Lösung sieht daher zwei Steuerventileinrichtungen wie Wechselventile vor, die einerseits an die Reservoirs bzw. einen Nebenverbraucherversorgungskreis und andererseits mit den Bremszylindern verbunden sind. Daneben sind die Bremselemente über die Wechselventile auch mit einem Vorderachsbremskreis (insbesondere im regulären Betrieb) verbindbar.

Bevorzugt handelt es sich bei wenigstens einer Steuerventileinrichtung und besonders bevorzugt bei beiden Steuerventileinrichtungen um ein Wechselventil, d.h. insbesondere ein Ventil, welches zwei oder mehrere Eingänge und einen Ausgang aufweist.

Zwischen mindestens einer Steuerventileinrichtung und dem dieser zugeordneten Bremselement ist eine weitere Ventileinrichtung angeordnet. Dabei ist bevorzugt diese weitere Ventileinrichtung in jedem Fall mit der ihr zugeordneten Steuerventileinrichtung verbunden. Auf diese Weise wird eine separate Ansteuerung der beiden Bremselemente ermöglicht.

Wenigstens eine Steuerventileinrichtung ist mit der ihr zugeordneten weiteren Ventileinrichtung als bauliche Einheit ausgebildet. Durch diese Ausbildung als bauliche Einheit wird eine sehr hohe Betriebssicherheit erreicht.

In einer weiteren vorteilhaften Ausführungsform weist die Vorrichtung wenigstens zwei voneinander getrennte Bremskreise auf. Die oben erwähnten Druckmittelreservoirs sind dabei bevorzugt Bestandteile dieser Bremskreise bzw. versorgen diese Bremskreise mit dem Druckmittel. Es wäre jedoch auch möglich, dass aus einem Druckmittelreservoir mehrere Bremskreise gespeist werden.

Vorzugsweise ist das erste Druckmittelreservoir Bestandteil eines Vorderachsbremskreises. Vorteilhaft sind diese beiden Bremskreise redundant zueinander ausgestaltet, d.h. der zweite Bremskreis kommt erst und insbesondere dann zum Einsatz, wenn der erste Bremskreis, d.h. der Vorderachsbremskreis ausfällt.

Vorzugsweise weist die Vorrichtung eine Steuereinrichtung auf, die bewirkt, dass die Bremselemente bei Ausfall eines Bremskreises durch den anderen Bremskreis versorgt werden.

Vorzugsweise wirkt die Bremsvorrichtung auf eine Vorderachse des Kraftfahrzeugs. Es wäre jedoch auch möglich, entsprechende Vorrichtungen auch für die Bremsung der Hinterachse zu verwenden. Bei einer weiteren vorteilhaften Ausführungsform handelt es sich bei dem Kraftfahrzeug um ein Nutzfahrzeug. Die folgende Erfindung ist weiterhin auf ein Kraftfahrzeug und insbesondere ein Nutzfahrzeug mit einer druckmittelbetätigten Bremsvorrichtung der oben beschriebenen Art gerichtet.

Die vorliegende Erfindung ist weiterhin auf eine druckmittelbetätigte Bremsvorrichtung für Fahrzeuge mit einem ersten von dem Druckmittel betätigbaren Bremselement und einem zweiten von dem Druckmittel betätigbaren Bremselement, mit einem ersten Bremskreis mit einem Druckmittelreservoir, welcher über wenigstens eine Verbindungsleitung mit dem ersten Bremselement und dem zweiten Bremselement verbindbar ist, um über diese Verbindungsleitung das Bremselement mit dem Druckmittel zu betätigen und einem zweiten Bremskreis, welcher über eine Verbindungsleitung mit dem zweiten Bremselement verbindbar, um über diese Verbindungsleitung das Bremselement mit dem Druckmittel zu betätigen.

Erfindungsgemäß weist die Bremsvorrichtung eine erste Steuerventileinrichtung, über welche das erste Bremselement sowohl mit einem ersten Bremskreis als auch mit einem zweiten Bremskreis verbindbar ist, auf, und zwischen dieser Steuerventileinrichtung und dem ersten Bremselement ist eine weitere Ventileinrichtung angeordnet, wobei die Steuerventileinrichtung mit der ihr zugeordneten weiteren Ventileinrichtung als bauliche Einheit ausgebildet ist.

Weitere vorteilhafte Ausführungsformen ergeben sich aus der beigefügten Zeichnung:

### Dabei zeigt:

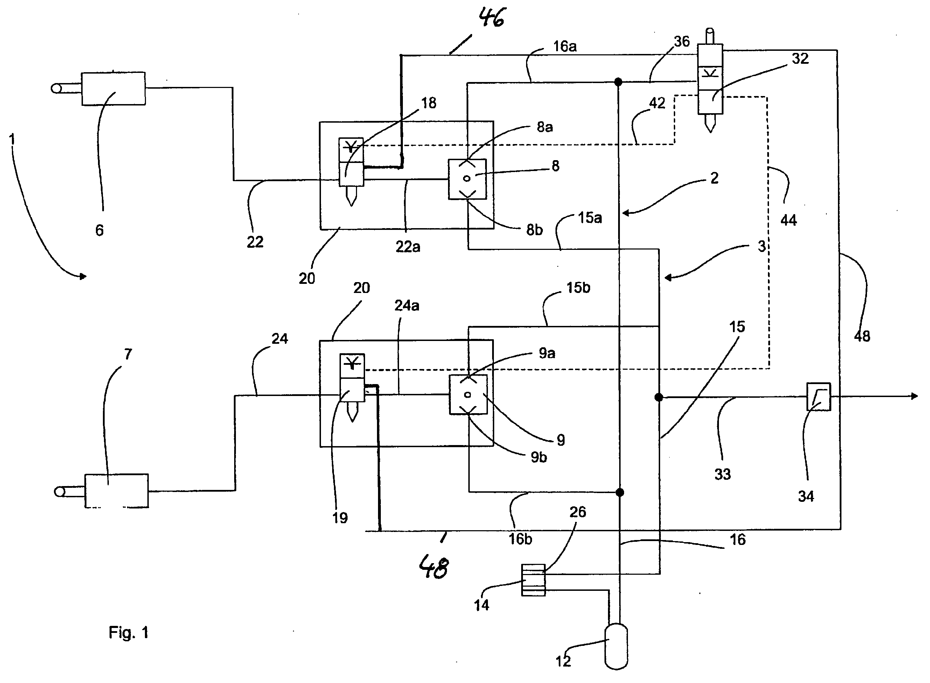

Fig. 1 eine schematische Darstellung einer erfindungsgemäßen Bremsvorrichtung.

Fig. 1 zeigt eine erfindungsgemäße Bremsvorrichtung 1. Diese Bremsvorrichtung 1 weist ein erstes Bremselement 6 sowie ein zweites Bremselement 7 auf, welche auf eine (nicht gezeigte) Vorderachse eines Kraftfahrzeugs wirken. Genauer gesagt wirken diese beiden Bremselemente 6,7, bzw. Bremszylinder auf die Vorderräder des Kraftfahrzeugs.

Das Bezugszeichen 8 bezieht sich auf eine erste Steuerventileinrichtung, welche dem ersten Bremselement 6 zugeordnet ist und die Zufuhr eines Pneumatik- oder Hydraulikmittels an dieses Bremselement 6 steuert. Entsprechend steuert eine Steuerventileinrichtung 9 die Zufuhr des Pneumatik- oder Hydraulikmittels an das Bremselement 7. Bei diesen Steuerventileinrichtungen 8, 9 handelt es sich um Wechselventile, welche hier über einen Ausgang zu den Bremselementen 6,7 und zwei Eingänge für zwei unterschiedliche Bremskreise 2,3 verfügen.

Die Bezugszeichen 22 und 24 beziehen sich auf Leitungen für das Pneumatik- oder Hydraulikmittel, welche die Steuerventileinrichtungen 8, 9 mit den jeweils diesen zugeordneten Bremselementen 6, 7 verbinden. Diese Leitungen 22 und 24 sind dabei vollständig voneinander getrennt.

Zwischen den Wechselventilen 8, 9 und den diesen jeweils zugeordneten Bremselementen 6, 7 sind jeweils weitere Ventileinrichtungen 18, 19 angeordnet. Diese weiteren Ventileinrichtungen 18, 19 können die Zufuhr des Pneumatik- oder Hydraulikmittels, insbesondere auch unabhängig von einer Stellung der jeweiligen Wechselventile 8, 9, steuern und insbesondere den Zufluß des Pneumatik- oder Hydraulikmittels an die Bremselemente 6, 7 modulieren.

Bei einer Ausführungsform ist zwischen den Wechselventilen 8, 9 und den diesen zugeordneten weiteren Ventileinrichtungen 18, 19 jeweils ein bruchsicheres Leitungsstück 22a, 24a angeordnet. Hierbei kann es sich beispielsweise um eine Stahlleitung handeln. Bei einer weiteren besonders bevorzugten Ausführungsform sind die Wechselventile 8, 9 und die diesen zugeordneten weiteren Ventileinrichtungen 18, 19 als bauliche Einheiten ausgebildet, wie durch das Bezugszeichen 20 angeordnet. Auf diese Weise ist es möglich, die Verbindungsleitungen 22a, 24a besonders zuverlässig auszuführen.

In diesem Zusammenhang wird darauf hingewiesen, dass es auch möglich ist, nur ein Wechselventil vorzusehen, welches in Fluidverbindung mit beiden weiteren Ventileinrichtungen steht und mit beiden weiteren Ventileinrichtungen 18, 19 eine bauliche Einheit bildet. Auch wäre es möglich, dass nur ein Wechselventil und ein weiteres Ventil vorgesehen ist, welches beide Bremselemente 6, 7 ansteuert, wobei das Wechselventil und die weitere Ventileinrichtung als bauliche Einheit ausgebildet sind oder auch zwei Wechselventile und ein weiteres Steuerventil, welche als bauliche Einheit ausgebildet sind.

Die beiden Wechselventile 8, 9 können bei der in Fig. 1 gezeigten Ausführungsform von zwei unterschiedlichen Bremskreisen 2, 3 versorgt werden. Dabei ist ein Reservoir 12, wie ein Druckbehälter 12, für den Vorderachsbremskreis 2 vorgesehen. Dieses Reservoir 12 steht über eine Verbindungsleitung 16 und Leitungsabschnitte 16a, 16b in Fluidverbindung mit den beiden Wechsellventilen 8, 9, bzw. einem ersten Eingang 8a, 9b dieser Wechselventile 8, 9.

Der zweite Eingang 8b, 9d der beiden Wechselventile steht über eine Leitung 15 und zwei Leitungsabschnitte 15a, 15b in Verbindung mit dem Ausgang 26 einer Verteilereinrichtung 14, wie hier einem Vierkreis - Schutzventil. Die Leitung 15 und die beiden Leitungsabschnitte 15a, 15b sind daher Bestandteil eines zweiten Bremskreises 3.

Diese Verteilereinrichtung 14 kann dabei beispielsweise mittels eines weiteren (nicht gezeigten Reservoirs) gespeist werden, es wäre jedoch auch möglich, dass die Verteilereinrichtung durch ein anderes Reservoir, beispielsweise das Reservoir für die Nebenverbraucher gespeist wird.

Daneben kann die Verteilereinrichtung 14 weitere (nicht gezeigte) Ausgänge zur Versorgung des Hinterachs - Bremssystems oder auch eines Anhänger - Bremssystems aufweisen.

Über eine Ausgangsleitung 33 können auch Nebenverbraucher an einen der Bremskreise 2 , 3 und insbesondere die Leitung 15 des Nebenverbraucher - Bremskreises 3 angeschlossen werden. Das Bezugszeichen 34 bezeichnet eine hier nicht genauer beschriebene Regeleinrichtung in der Ausgangsleitung 33.

Das Bezugszeichen 32 kennzeichnet in seiner Gesamtheit ein Fußbremsmodul. Dieses Fußbremsmodul steht über eine Fluidleitung 36 in Verbindung mit dem Vorderachs - Bremskreis 2. Daneben sind elektrische Verbindungsleitungen 42, 44 vorgesehen (gestrichelt dargestellt), welche das Fußbremsmodul 32 mit den weiteren Ventileinrichtungen 18, 19 verbinden, um diese und damit den auf die Bremselemente gelangenden Druckmittelfluss zu steuern. Weiterhin ist auch noch eine über die Verbindungsleitungen 46 und 48 Steuerungseinrichtung vorgesehen, welche die beiden weiteren Ventile 18, 19 ansteuert.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Bremsvorrichtung
- 2: erster Bremskreis
- 3: zweiter Bremskreis
- 6: erstes Bremselement
- 7: zweites Bremselement
- 8: erste Steuerventileinrichtung
- 9: zweite Steuerventileinrichtung
- 8a, 9a: erster Eingang der Steuerventileinrichtung 8,9
- 8b, 9b: zweiter Eingang der Steuerventileinrichtung 8,9
- 12: Druckmittelreservoir
- 14: Verteileinrichtung
- 15, 16: Verbindungsleitung für Druckmittel
- 15a, 15b, 16a, 16b: Abschnitte der Verbindungsleitung 15
- 18, 19: weitere Ventileinrichtung
- 20: bauliche Einheit aus Steuerventileinrichtung und weiterer Ventileinrichtung
- 22, 24: Verbindungsleitung
- 22a, 24a: bruchsichere Leitungsstücke der Verbindungsleitungen 22, 24
- 26: Ausgang
- 32: Fussbremsmodul
- 33: Ausgangsleitung
- 34: Regeleinrichtung
- 42, 44: elektrische Verbindungsleitungen
- 46, 48: Druckmittelleitung

## Patentansprüche

1. Druckmittelbetätigte Bremsvorrichtung (1) für Fahrzeuge mit einem ersten von dem Druckmittel betätigbaren Bremselement (6) und einem zweiten von dem Druckmittel betätigbaren Bremselement (7), mit einem ersten Bremskreis (2) mit einem Druckmittelreservoir (12), welcher Bremskreis (2) über wenigstens eine Verbindungsleitung (22, 24) mit dem ersten Bremselement (6) verbindbar ist um über diese Verbindungsleitung (22, 24) das Bremselement (6) mit dem Druckmittel zu betätigen und einem zweiten Bremskreis (3), welcher über wenigstens eine Verbindungsleitung (22, 24) mit dem zweiten Bremselement (7) verbindbar ist, um über diese Verbindungsleitung (22, 24) das zweite Bremselement (7) mit dem Druckmittel zu betätigen,
wobei die Bremsvorrichtung (1) eine erste Steuerventileinrichtung (8), über welche das erste Bremselement (6) sowohl mit dem ersten Bremskreis (2) als auch mit dem zweiten Bremskreis (3) verbindbar ist und eine zweite Steuerventileinrichtung (9), über welche das zweite Bremselement (7) sowohl mit dem ersten Bremskreis (2) als auch mit dem zweiten Bremskreis (3) verbindbar ist, aufweist;
**dadurch gekennzeichnet, dass**
zwischen wenigstens einer Steuerventileinrichtung (8, 9) und dem dieser zugeordneten Bremselement (6, 7) eine weitere Ventileinrichtung (18,19) angeordnet ist und wenigstens eine Steuerventileinrichtung (8, 9) mit der ihr zugeordneten weiteren Ventileinrichtung (18, 19) als bauliche Einheit (20) ausgebildet ist.

2. Bremsvorrichtung (1) nach Anspruch 1,
**dadurch gekennzeichnet, dass**
das erste Bremselement (6) und das zweite Bremselement (7) unabhängig voneinander betätigbar sind.

3. Bremsvorrichtung (1) nach wenigstens einem der vorangegangenen Ansprüche,
**dadurch gekennzeichnet, dass**
wenigstens eine Steuerventileinrichtung (8, 9) ein Wechselventil ist.

4. Bremsvorrichtung (1) nach wenigstens einem der vorangegangenen Ansprüche, **dadurch gekennzeichnet, dass**
die Vorrichtung wenigstens zwei voneinander getrennte Bremskreise (2, 3) aufweist.

5. Bremsvorrichtung (1) nach Anspruch 1,
**dadurch gekennzeichnet, dass**
das erste Druckmittelreservoir (12) Bestandteil eines Vorderachs - Bremskreises (A) des Fahrzeugs ist.

6. Bremsvorrichtung (1) nach Anspruch 1,
**dadurch gekennzeichnet, dass**
die Vorrichtung (1) eine Steuereinrichtung aufweist, welche bewirkt, dass die Bremselemente (6, 7) bei Ausfall eines Bremskreises (2) durch den anderen Bremskreis (3) versorgt werden.

7. Kraftfahrzeug mit einer Bremsvorrichtung (1) nach wenigstens einem der vorangegangenen Ansprüche,
**dadurch gekennzeichnet, dass**
die Bremsvorrichtung (1) auf eine Vorderachse des Kraftfahrzeugs wirkt.

8. Kraftfahrzeug nach Anspruch 7,
**dadurch gekennzeichnet, dass**
das Kraftfahrzeug ein Nutzfahrzeug ist.

9. Druckmittelbetätigte Bremsvorrichtung (1) für Fahrzeuge mit einem ersten von dem Druckmittel betätigbaren Bremselement (6) und einem zweiten von dem Druckmittel betätigbaren Bremselement (7), mit einem ersten Bremskreis (2) mit einem Druckmit telreservoir (12), welcher Bremskreis (2) über wenigstens eine Verbindungsleitung (22, 24) mit dem ersten Bremselement (6) verbindbar ist um über diese Verbindungs leitung (22, 24) das Bremselement (6) mit dem Druckmittel zu betätigen und einem zweiten Bremselement (7) verbindbar ist, um über diese Verbindungsleitung (22, 24) das zweite Bremselement (7) mit dem Druckmittel zu betätigen,
wobei die Bremsvorrichtung (1) eine erste Steuerventileinrichtung (8), über welche das erste Bremselement (6) sowohl mit dem ersten Bremskreis (2) als auch mit dem zweiten Bremskreis (3) verbindbar ist, aufweist,
**dadurch gekennzeichnet, dass**
zwischen dieser Steuerventileinrichtung (8) und dem ersten Bremselement eine zweite Ventileinrichtung (18) angeordnet ist, wobei die Steuerventileinrichtung (8) mit der ihr zugeordneten weiteren Ventileinrichtung (18) als bauliche Einheit ausgebildet ist.

## Claims

1. Braking apparatus (1) which is actuated by pressure medium for vehicles having a first braking element (6) which can be actuated by the pressure medium and a second braking element (7) which can be actuated by the pressure medium, having a first braking circuit (2) with a pressure medium reservoir (12), which braking circuit (2) can be connected to the first braking element (6) via at least one connecting line (22, 24), in order to actuate the braking element (6) by way of the pressure medium via the said connecting line (22, 24), and a second braking circuit (3) which can be connected to the second braking element (7) via at least one connecting line (22, 24), in order to actuate the second braking element (7) by way of the pressure medium via the said connecting line (22, 24), the braking apparatus (1) having a first control valve device (8), via which the first braking element (6) can be connected both to the first braking circuit (2) and to the second braking circuit (3), and a second control valve device (9), via which the second braking element (7) can be connected both to the first braking circuit (2) and to the second braking circuit (3); **characterized in that** a further valve device (18, 19) is arranged between at least one control valve device (8, 9) and the braking element (6, 7) which is assigned to it, and at least one control valve device (8, 9) is configured, with the further valve device (18, 19) which is assigned to it, as a structural unit (20).

2. Braking apparatus (1) according to Claim 1, **characterized in that** the first braking element (6) and the second braking element (7) can be actuated independently of one another.

3. Braking apparatus (1) according to at least one of the preceding claims, **characterized in that** at least one control valve device (8, 9) is a shuttle valve.

4. Braking apparatus (1) according to at least one of the preceding claims, **characterized in that** the apparatus has at least two braking circuits (2, 3) which are separate from one another.

5. Braking apparatus (1) according to Claim 1, **characterized in that** the first pressure medium reservoir (12) is a constituent part of a front axle braking circuit (A) of the vehicle.

6. Braking apparatus (1) according to Claim 1, **characterized in that** the apparatus (1) has a control device which causes the braking elements (6, 7) to be supplied by the other braking circuit (3) if one braking circuit (2) fails.

7. Motor vehicle having a braking apparatus (1) according to at least one of the preceding claims, **characterized in that** the braking apparatus (1) acts on a front axle of the motor vehicle.

8. Motor vehicle according to Claim 7, **characterized in that** the motor vehicle is a commercial vehicle.

9. Braking apparatus (1) which is actuated by pressure medium for vehicles having a first braking element (6) which can be actuated by the pressure medium and a second braking element (7) which can be actuated by the pressure medium, having a first braking circuit (2) with a pressure medium reservoir (12), which braking circuit (2) can be connected to the first braking element (6) via at least one connecting line (22, 24), in order to actuate the braking element (6) by way of the pressure medium via the said connecting line (22, 24), and can be connected to a second braking element (7), in order to actuate the second braking element (7) by way of the pressure medium via the said connecting line (22, 24), the braking apparatus (1) having a first control valve device (8), via which the first braking element (6) can be connected both to the first braking circuit (2) and to the second braking circuit (3), **characterized in that** a second valve device (18) is arranged between the said control valve device (8) and the first braking element, the control valve device (8) being configured, with the further valve device (18) which is assigned to it, as a structural unit.

## Revendications

1. Dispositif de freinage (1) actionné par un fluide de pression pour véhicules automobiles, comprenant un premier élément de freinage (6) pouvant être actionné par le fluide de pression et un deuxième élément de freinage (7) pouvant être actionné par le fluide de pression, avec un premier circuit de freinage (2) avec un réservoir de fluide de pression (12), lequel circuit de freinage (2) peut être connecté par le biais d'au moins une conduite de liaison (22, 24) au premier élément de freinage (6) afin d'actionner par le biais de cette conduite de liaison (22, 24) l'élément de freinage (6) avec le fluide de pression et avec un deuxième circuit de freinage (3) qui peut être connecté par le biais d'au moins une conduite de liaison (22, 24) au deuxième élément de freinage (7) afin d'actionner par le biais de cette conduite de liaison (22, 24) le deuxième élément de freinage (7) avec le fluide de pression, le dispositif de freinage (1) présentant un premier dispositif de soupape de commande (8) par le biais duquel le premier élément de freinage (6) peut être connecté à la fois au premier circuit de freinage (2) et au deuxième circuit de freinage (3) et un deuxième dispositif de soupape de commande (9) par le biais duquel le deuxième élément de freinage (7) peut être connecté à la fois au premier circuit de freinage (2) et au deuxième circuit de freinage (3) ;
**caractérisé en ce**
**qu'**un dispositif de soupape supplémentaire (18, 19) est disposé entre au moins un dispositif de soupape de commande (8, 9) et l'élément de freinage (6, 7) associé à celui-ci et au moins un dispositif de soupape de commande (8, 9) est réalisé en tant qu'unité structurelle (20) avec le dispositif de soupape supplémentaire (18, 19) associé à celui-ci.

2. Dispositif de freinage (1) selon la revendication 1,
**caractérisé en ce que**
le premier élément de freinage (6) et le deuxième élément de freinage (7) peuvent être actionnés indépendamment l'un de l'autre.

3. Dispositif de freinage (1) selon au moins l'une quelconque des revendications précédentes,
**caractérisé en ce que**
au moins un dispositif de soupape de commande (8, 9) est une soupape d'échange.

4. Dispositif de freinage (1) selon au moins l'une quelconque des revendications précédentes,
**caractérisé en ce que**
le dispositif présente au moins deux circuits de freinage séparés l'un de l'autre (2, 3).

5. Dispositif de freinage (1) selon la revendication 1,
**caractérisé en ce que**
le premier réservoir de fluide de pression (12) fait partie d'un circuit de freinage d'essieu avant (A) du véhicule.

6. Dispositif de freinage (1) selon la revendication 1,
**caractérisé en ce que**
le dispositif (1) présente un dispositif de commande qui fait en sorte que les éléments de freinage (6, 7) soient alimentés par l'autre circuit de freinage (3) en cas de panne d'un circuit de freinage (2).

7. Véhicule automobile comprenant un dispositif de freinage (1) selon au moins l'une quelconque des revendications précédentes,
**caractérisé en ce que**
le dispositif de freinage (1) agit sur un essieu avant du véhicule automobile.

8. Véhicule automobile selon la revendication 7, **caractérisé en ce que**
le véhicule automobile est un véhicule utilitaire.

9. Dispositif de freinage (1) actionné par un fluide de pression pour véhicules automobiles comprenant un premier élément de freinage (6) pouvant être actionné par le fluide de pression et un deuxième élément de freinage (7) pouvant être actionné par le fluide de pression, avec un premier circuit de freinage (2) avec un réservoir de fluide de pression (12), lequel circuit de freinage (2) peut être connecté par le biais d'au moins une conduite de liaison (22, 24) au premier élément de freinage (6) afin d'actionner par le biais de cette conduite de liaison (22, 24) l'élément de freinage (6) avec le fluide de pression, et qui peut être connecté à un deuxième élément de freinage (7) afin d'actionner par le biais de cette conduite de liaison (22, 24) le deuxième élément de freinage (7) avec le fluide de pression,
le dispositif de freinage (1) présentant un premier dispositif de soupape de commande (8) par le biais duquel le premier élément de freinage (6) peut être connecté à la fois au premier circuit de freinage (2) et au deuxième circuit de freinage (3),
**caractérisé en ce**
**qu'**un deuxième dispositif de soupape (18) est disposé entre ce dispositif de soupape de commande (8) et le premier élément de freinage, le dispositif de soupape de commande (8) étant réalisé sous forme d'unité structurelle avec le dispositif de soupape supplémentaire (18) associé à celui-ci.
